# EUROPEAN PATENT APPLICATION

(11) **EP 4 300 836 A1**
(43) Date of publication of application: **03.01.2024**
(21) Application number: 21928591.3
(22) Date of filing: 05.03.2021
(51) Int. Cl.: H04B 3/54, H04B 3/04

(54) **METHOD, APPARATUS AND SYSTEM FOR POWER LINE COMMUNICATION FOR INTERNET OF THINGS**

(71) Applicant: Huawei Technologies Co., Ltd., Shenzhen, Guangdong 518129 (CN)
(72) Inventor: PAN, Dao, Shenzhen, Guangdong 518129 (CN); LIN, Zefeng, Shenzhen, Guangdong 518129 (CN)
(74) Representative: Huawei European IPR
(86) International application number: PCT/CN2021/079407
(87) International publication number: WO 2022/183510

(57) **Abstract**

This application relates to a method, an apparatus, and a system of power line communication (PLC) for the internet of things (IoT). The method includes: A sending device receives a first request from a receiving device, where the first request requests to perform channel assessment in a first time window in a power line communication periodicity; in response to the first request, the sending device sends a sounding signal required for performing channel assessment to the receiving device; the sending device receives a modulation parameter from the receiving device, where the modulation parameter is determined by performing channel assessment based on the sounding signal; and the sending device performs data transmission with the receiving device in the first time window based on the modulation parameter. Based on a technical solution proposed herein, rate performance and resource utilization efficiency of both a broadband service and an IoT service in a PLC broadband and PLC IoT convergence scenario can be greatly improved when there is limited complexity increase.

## Description

### TECHNICAL FIELD

This application relates to the field of power line communication (PLC, Power Line Communication), and in particular, to a method, an apparatus, and a system of power line communication for the internet of things (IoT, Internet of Things).

### BACKGROUND

PLC means transmitting data or information by using power lines in a digital signal processing method. A PLC broadband technology uses low-frequency power lines to send broadband data. Because the PLC broadband technology basically does not need to deploy additional network lines and covers a much larger area than lines of other types of carriers, the PLC broadband technology has been widely used in various networks such as home networks, and industry networks. Recently, with development of an IoT technology, a PLC IoT technology is also widely used in applications such as industry networks, for example, in smart grids. The PLC IoT technology uses power lines to implement communication between IoT nodes. Recently, efforts are made to apply PLC IoT to smart home applications. Therefore, convergence of a PLC broadband network and a PLC IoT network has gradually become a rigid requirement. In such a converged network, PLC broadband communication and PLC IoT communication work in a same power line network, use a same medium, and share physical layer transmission resources.

Generally, in the converged network, the same medium needs to support several PLC broadband nodes (also referred to as broadband nodes) and hundreds of PLC IoT nodes (also referred to as IoT nodes or narrowband nodes for short). Although data traffic of each IoT node is small, a quantity of nodes is large, so that total costs of IoT applications are large. In addition, a rate that can be implemented by using the IoT technology is low, so that a large quantity of resources are occupied, a quantity of communication resources that can be used by the broadband nodes are occupied, and a rate that can be implemented by the broadband nodes is greatly reduced. In addition, a bandwidth requirement of the IoT nodes is increasing. Therefore, an improved solution is needed to improve communication performance of both the broadband nodes and the IoT nodes in the converged network.

### SUMMARY

Embodiments of this disclosure provide a power line communication solution for the internet of things, to improve communication performance of nodes in such a converged network.

According to a first aspect of an embodiment of this disclosure, a method of power line communication for the internet of things is provided. The method includes: A sending device receives a first request from a receiving device, where the first request requests to perform channel assessment in a first time window in a power line communication periodicity; in response to the first request, the sending device sends a sounding signal required for performing channel assessment to the receiving device; the sending device receives a modulation parameter from the receiving device, where the modulation parameter is determined by performing channel assessment based on the sounding signal; and the sending device performs data transmission with the receiving device in the first time window based on the modulation parameter.

According to a second aspect of an embodiment of this disclosure, a method of power line communication for the internet of things is provided. The method includes: A receiving device sends a first request to a sending device, where the first request requests to perform channel assessment in a first time window in a power line communication periodicity; the receiving device receives a sounding signal that is required for performing channel assessment and that is sent by the sending device in response to the first request; the receiving device sends a modulation parameter to the sending device, where the modulation parameter is determined by performing channel assessment based on the sounding signal; and the receiving device performs data transmission with the sending device in the first time window based on the modulation parameter.

According to a third aspect of an embodiment of this disclosure, a method of power line communication for the internet of things is provided. The method includes: A control device receives a third request for resource allocation of a sounding signal from a sending device, where the third request includes information about a first time window in a power line communication periodicity, the third request is sent by the sending device in response to a first request from a receiving device, and the first request requests to perform channel assessment in the first time window; and the control device sends information about the resource allocation to the sending device.

According to a fourth aspect of an embodiment of this disclosure, a communication apparatus of power line communication for the internet of things is provided. The communication apparatus includes: a processor; and a power line communication interface coupled to the processor. The processor is configured to: receive a first request from a receiving device through the power line communication interface, where the first request requests to perform channel assessment in a first time window in a power line communication periodicity; send, in response to the first request, a sounding signal required for performing channel assessment to the receiving device through the power line communication interface; receive a modulation parameter from the receiving device through the power line communication interface, where the modulation parameter is determined by performing the channel assessment based on the sounding signal; and perform data transmission with the receiving device through the power line communication interface in the first time window based on the modulation parameter.

According to a fifth aspect of an embodiment of this disclosure, a communication apparatus of power line communication for the internet of things is provided. The communication apparatus includes: a processor; and a power line communication interface coupled to the processor. The processor is configured to: send a first request to a sending device through the power line communication interface, where the first request requests to perform channel assessment in a first time window in a power line communication periodicity; receive, through the power line communication interface, a sounding signal that is required for performing channel assessment and that is sent by the sending device in response to the first request; send a modulation parameter to the sending device through the power line communication interface, where the modulation parameter is determined by performing channel assessment based on the sounding signal; and perform data transmission with the sending device through the power line communication interface in the first time window based on the modulation parameter.

According to a sixth aspect of an embodiment of this disclosure, a control device of power line communication for the internet of things is provided. The control device includes: a processor; and a power line communication interface coupled to the processor. The processor is configured to: receive a third request for resource allocation of a sounding signal from a sending device through the power line communication interface, where the third request includes information about a first time window in a power line communication periodicity, the third request is sent by the sending device in response to a first request from a receiving device, and the first request requests to perform channel assessment in the first time window; and send information about the resource allocation to the sending device through the power line communication interface.

According to a seventh aspect of an embodiment of this disclosure, an apparatus of power line communication for the internet of things is provided. The apparatus includes: a first request receiving unit, configured for a sending device to receive a first request from a receiving device, where the first request requests to perform channel assessment in a first time window in a power line communication periodicity; a sounding signal sending unit, configured for the sending device to send a sounding signal required for performing channel assessment to the receiving device in response to the first request; a modulation parameter receiving unit, configured for the sending device to receive a modulation parameter from the receiving device, where the modulation parameter is determined by performing channel assessment based on the sounding signal; and a first data transmission unit, configured for the sending device to perform data transmission with the receiving device in the first time window based on the modulation parameter.

According to an eighth aspect of an embodiment of this disclosure, an apparatus of power line communication for the internet of things is provided. The apparatus includes: a first request sending unit, configured for a receiving device to send a first request to a sending device, where the first request requests to perform channel assessment in a first time window in a power line communication periodicity; a sounding signal receiving unit, configured for the receiving device to receive a sounding signal that is required for performing channel assessment and that is sent by the sending device in response to the first request; a modulation parameter sending unit, configured for the receiving device to send a modulation parameter to the sending device, where the modulation parameter is determined by performing channel assessment based on the sounding signal; and a second data transmission unit, configured for the receiving device to perform data transmission with the sending device in the first time window based on the modulation parameter.

According to a ninth aspect of an embodiment of this disclosure, an apparatus of power line communication for the internet of things is provided. The apparatus includes: a third request receiving unit, configured for a control device to receive a third request for resource allocation of a sounding signal from a sending device, where the third request includes information about a first time window in a power line communication periodicity, the third request is sent by the sending device in response to a first request from a receiving device, and the first request requests to perform channel assessment in the first time window; and a resource allocation unit, configured for the control device to send information about the resource allocation to the sending device.

According to a tenth aspect of an embodiment of this disclosure, a system of power line communication for the internet of things is provided. The system includes the communication apparatuses in the fourth aspect and the fifth aspect and the control device in the sixth aspect.

According to an eleventh aspect of an embodiment of this disclosure, a chip is provided, including a processor and a front-end circuit, where the processor and the front-end circuit operate together to perform the method in the first aspect, the second aspect, or the third aspect.

According to a twelfth aspect of an embodiment of this disclosure, a computer-readable storage medium is provided. The computer-readable storage medium includes machine-executable instructions, where when the machine-executable instructions are executed by a device, the device is enabled to perform the method according to the first aspect, the second aspect, or the third aspect.

According to a thirteenth aspect of an embodiment of this disclosure, a computer program product is provided. The computer program product includes computer program code, where when the computer program code is executed by a device, the device is enabled to perform the method according to the first aspect, the second aspect, or the third aspect.

It may be understood from the following descriptions of the example embodiments that, according to the technical solutions proposed herein, rate performance and resource utilization efficiency of both a PLC IoT service and a PLC broadband service can be greatly improved when there is limited complexity improvement.

It should be understood that content described in the summary is not intended to limit the key or important features of embodiments of this disclosure, nor to limit the scope of this disclosure. Other features of this disclosure may be readily understood from the following descriptions.

### BRIEF DESCRIPTION OF DRAWINGS

The foregoing and other features, advantages, and aspects of embodiments of this disclosure become more apparent with reference to the accompanying drawings and the following detailed descriptions. In the accompanying drawings, same or similar reference numerals indicate same or similar elements.
FIG. 1 is a schematic diagram of an example PLC network in which an embodiment of this disclosure may be implemented;
FIG. 2A is a schematic diagram of selecting a time window in a rate boost mode (RBM, Rate Boost Mode) according to an embodiment of this disclosure;
FIG. 2B is a schematic diagram of transmission opportunity (TXOP, Transmission Opportunity) allocation in a non-RBM according to an embodiment of this disclosure;
FIG. 2C is a schematic diagram of TXOP allocation in an RBM according to an embodiment of this disclosure;
FIG. 3 is a schematic diagram of a process of entering an RBM in a downlink direction according to an embodiment of this disclosure;
FIG. 4 is a schematic diagram of a process of entering an RBM in an uplink direction according to an embodiment of this disclosure;
FIG. 5 is a schematic diagram of a process of exiting an RBM according to an embodiment of this disclosure;
FIG. 6 is a schematic diagram of another process of entering an RBM in a downlink direction according to an embodiment of this disclosure;
FIG. 7 is a flowchart of a method of PLC for the IoT implemented at a sending device according to an embodiment of this disclosure;
FIG. 8 is a flowchart of a method of PLC for the IoT implemented at a receiving device according to an embodiment of this disclosure;
FIG. 9 is a flowchart of a method of PLC for the IoT implemented at a control device according to an embodiment of this disclosure;
FIG. 10 is a schematic block diagram of an apparatus of PLC for the IoT implemented at a sending device according to an embodiment of this disclosure;
FIG. 11 is a schematic block diagram of an apparatus of PLC for the IoT implemented at a receiving device according to an embodiment of this disclosure;
FIG 12 is a schematic block diagram of an apparatus of PLC for the IoT implemented at a control device according to an embodiment of this disclosure; and
FIG. 13 is a simplified block diagram of a device suitable for implementing an embodiment of this disclosure.

### DESCRIPTION OF EMBODIMENTS

Embodiments of this disclosure are described in more detail in the following with reference to the accompanying drawings. Although some embodiments of this disclosure are illustrated in the accompanying drawings, it should be understood that this disclosure may be implemented in various forms and should not be construed as limited to the embodiments set forth herein, but rather are provided for a more thorough and complete understanding of this disclosure. It should be understood that the accompanying drawings and embodiments of this disclosure are merely used as examples, but are not intended to limit the protection scope of this disclosure.

The term "include" and variants thereof used herein indicate open inclusion, that is, "include but is not limited to". The term "based on" means "based at least in part on". The term "an embodiment" means "at least one embodiment"; and the term "another embodiment" means "at least one other embodiment". Other terms are defined in the following descriptions.

It should be understood that although the terms "first" and "second" may be used in this specification to describe various components, these components should not be limited by these terms. These terms are only used to distinguish one component from another. For example, a first component may be referred to as a second component, and similarly a second component may be referred to as a first component without departing from the scope of the embodiments. As used in this specification, the term "and/or" includes any and all combinations of one or more of the listed terms.

The term "circuit" used herein is one or more of the following:
(a) an implementation of only a hardware circuit (such as an implementation of only an analog and/or digital circuit); and
(b) a combination of a hardware circuit and software, such as (if applicable): (i) a combination of an analog and/or digital hardware circuit and software/firmware, and (ii) any part of a hardware processor and software (including a digital signal processor, software, and a memory that work together to enable a device such as an optical line terminal (OLT) or another computing device to perform various functions); and
(c) a hardware circuit and/or a processor, such as a microprocessor or a part of a microprocessor, which requires software (such as firmware) for operation, but may not have software when software is not required for operation.

The definition of a circuit is applicable to all application scenarios of the term in this application (including any claim). In another example, the term "circuit" used herein also covers implementations of only a hardware circuit or a processor (or a plurality of processors), or a part of a hardware circuit or a processor, or software or firmware accompanying it. For example, if applicable to a particular claim element, the term "circuit" also covers a baseband integrated circuit or a processor integrated circuit or a similar integrated circuit in the OLT or other computing devices.

As used in this specification, the term "PLC network" refers to any network that uses power lines to transmit data or information in a digital signal processing method. The network may be used in combination with wired networks such as a digital subscriber line technology (DSL, Digital Subscriber Line) using telephone lines and a cable modem (CM, Cable Modem) using coaxial cable lines of cable televisions, and may also be used in combination with wireless networks such as Wi-Fi, and Bluetooth. It is clear that the network may also be used in combination with any other suitable network currently available or developed in the future.

As used in this specification, the term "PLC network primary node (DM, Domain Master)" is a primary node in the PLC network, and is responsible for access, authentication, and scheduling and allocation of resource slots of other nodes in the PLC network.

As used in this specification, the term "PLC broadband node" is any terminal device capable of performing broadband communication through PLC. The terminal device may have a wireless or wired communication capability. Examples of the terminal device include, but are not limited to, a customer-premises equipment (CPE), user equipment (UE), a personal computer, a desktop computer, a mobile phone, a cellular phone, a smartphone, a personal digital assistant (PDA), a portable computer, a tablet, a wearable device, an internet of things (IoT) device, a machine type communication (MTC) device, a vehicular device for V2X (X is a pedestrian, a vehicle or an infrastructure/a network) communication, an image capture device such as a digital camera, a gaming device, a music storage and playback device, an Internet device capable of wireless or wired Internet access and browsing, and the like.

As used in this specification, the term "IoT subdomain" is a sub-network formed by IoT nodes in the PLC network. The term "IoT subdomain node (IoT-SDM, IoT-Subdomain Master)" is a node that manages or coordinates data transmission in the IoT subdomain. The term "IoT node" or "IoT terminal node" may be an IoT terminal device having a PLC capability, such as a smart home appliance, a smart meter, and a wearable device. The term "IoT relay node" is a repeater in the foregoing IoT subdomain, and is connected to the IoT-SDM, to extend a network transmission distance.

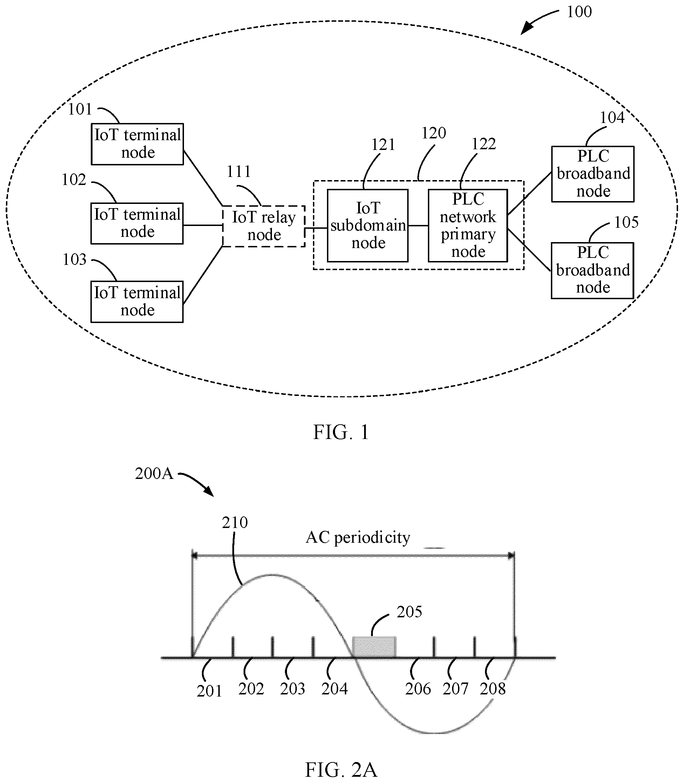

FIG. 1 is a schematic diagram of an example PLC network 100 in which an embodiment of this disclosure may be implemented. As shown in FIG. 1, the PLC network 100 may include IoT terminal nodes 101, 102, and 103, PLC broadband nodes 104 and 105, an IoT relay node 111, an IoT-SDM 121, and a DM 122. The IoT terminal nodes 101, 102, and 103 may communicate with the IoT-SDM 121 through the IoT relay node 111, and the IoT-SDM 121 may communicate with a remote server (not shown) outside the PLC network 100 through the DM 122. In other words, the IoT terminal nodes 101, 102, and 103 need to communicate with the DM 122 through the IoT-SDM 121. The PLC broadband nodes 104 and 105 may communicate with the DM 122 through a power line channel, to access a network such as the Internet, a local area network, a metropolitan area network through the DM 122. In some embodiments, the IoT-SDM 121 and the DM 122 may be implemented as separate physical entities. In some embodiments, the IoT-SDM 121 and the DM 122 may be implemented on a same physical entity, as shown by 120 in the figure.

Although the IoT relay node 111 is shown in FIG. 1, in some embodiments, the PLC network 100 may not include the IoT relay node 111. In this case, the IoT terminal nodes 101, 102, and 103 may directly communicate with the IoT-SDM 121. In addition, it should be understood that quantities of the IoT terminal nodes, the PLC broadband nodes, and the IoT relay nodes are not limited to the example shown in FIG. 1, but may include any other suitable larger or smaller quantity. Functions of the IoT-SDM 121 may be centrally or distributedly implemented on any node in the IoT subdomain, and functions of the DM 122 may be centrally or distributedly implemented on any node in the PLC network. In addition, the PLC network 100 may include more additional components that are not shown, or some components that are shown may be omitted. This is not limited in this embodiment of this disclosure. An implementation of the PLC network 100 is also not limited to the specific example described above, but may be implemented in any suitable manner.

In an existing PLC IoT technology, to achieve low costs, low power consumption, and high reliability, a high robustness communication technology, for example, a robust orthogonal frequency division multiplexing (ROBO, Robust Orthogonal Frequency Division Multiplexing) mode used in a Homeplug Green PHY standard and IEEE 1901.1, is used in a physical layer technology; and an ITU-T G.hn protocol also defines a robust communication mode (RCM, Robust Communication Mode). In a ROBO/RCM mode, low-order bit modulation is always used and repeated coding is used. Therefore, transmission reliability can be enhanced to support a data rate of 4 Mbps to 10 Mbps. Table 1 below shows examples of parameters in several ROBO modes.

**Table 1 Examples of parameters in the ROBO modes**

| Mode | Physical layer rate | Modulation order | FEC bit rate | Repeated copy times |
|---|---|---|---|---|
| Small-sized ROBO | 3.8 Mbps | QPSK | 1/2 | 5 |
| Standard ROBO | 4.9 Mbps | QPSK | 1/2 | 4 |
| High-speed ROBO | 9.8 Mbps | QPSK | 1/2 | 2 |

It can be learned that, by using the ROBO mode on the physical layer, a communication solution is simple, a quantity of supported nodes is large, and reliability is high, but a rate is low.

In a PLC broadband technology, a carrier-based adaptive modulation characteristic is used. A modulation order can reach 4096 QAM, and the rate is high. However, because complexity is high, a quantity of supported nodes is small. Table 2 below shows an example of comparison between parameters of the PLC broadband technology and the PLC IoT technology.

**Table 2 Example of comparison between the parameters of the PLC broadband technology and the PLC IoT technology**

| Parameter | PLC broadband (with reference to a Homeplug AV2.0 standard) | PLC IoT (with reference to the Homeplug Green PHY standard) |
|---|---|---|
| Bandwidth | 2 to 80 MHz | 2 to 30 MHz |
| Quantity of nodes | 16 to 32 nodes | 256 nodes or more |
| Physical layer rate | -1 to 2 Gbps | -10 Mbps |

In this way, in a PLC broadband and PLC IoT convergence scenario, a same medium needs to support several broadband nodes and hundreds of IoT nodes. Although data traffic of each IoT node is small, a quantity of nodes is large, so that total costs of IoT applications are large. In addition, because a rate that can be implemented by the IoT technology in the foregoing ROBO mode is low, a large quantity of resources are occupied. Consequently, a quantity of communication resources that can be used by the broadband nodes are occupied and a rate that can be achieved by the broadband nodes are significantly reduced.

In addition, other than simple control requirements and intermittent reporting requirements, bandwidth requirements of the IoT applications are increasing. For example, sensors have constant fixed bandwidth requirements, for example, 150 Kbps per sensor. In this case, 40 sensors require a bandwidth of 6 Mbps. This is far greater than a communication bandwidth requirement of a traditional smart grid.

In view of this, an embodiment of this disclosure provides an improved solution of PLC for IoT. According to the solution proposed herein, a rate boost mode (RBM, Rate Boost Mode) is introduced. For convenience, the RBM is also referred to as a first mode in this specification. In the RBM, an IoT node performs data transmission based on at least one time window in a power line communication periodicity. Specifically, one of the at least one time window is selected, and channel assessment is performed in the selected time window, to determine a modulation parameter for data transmission in the selected time window. Through collaboration between the physical layer and a medium access control (MAC, Medium Access Control) layer, transmission performance on a unit resource is greatly improved, and a location of a slot of the physical layer is locked for data flow transmission. In this way, high rate performance is achieved by using a small quantity of resources, and resource utilization efficiency of the broadband node in communication is approximated. For ease of understanding, the following provides descriptions in detail with reference to FIG. 2A to FIG. 2C.

FIG. 2A is a schematic diagram 200A of selecting a time window in an RBM according to an embodiment of this disclosure. As known, a power line channel also changes in real time due to real-time changes in load and noise. However, the real-time change of the power line channel has a characteristic of an alternate current (AC, Alternate Current) periodicity, as shown by 210 in FIG. 2A. As shown in FIG. 2A, windowing may be performed based on the AC periodicity of the power line channel, for example, eight time windows 201 to 208 are obtained through division. It should be understood that a quantity of time windows is not limited thereto, but any proper quantity may be used.

According to this embodiment of this disclosure, in the RBM, a single time window may be selected to perform channel assessment, and a physical layer transmission parameter for the single time window may be outputted. In this specification, the physical layer transmission parameter is also referred to as a bit allocation table (BAT, Bit Allocation Table), and each time window is also referred to as a BAT region. As shown in FIG. 2A, a time window 205 may be selected to perform rate adaptation operation in the RBM.

In PLC broadband communication, the BAT is usually maintained separately for each time window. The BAT is at a carrier level, and occupies a large amount of storage space. In addition, signaling overheads required for BAT synchronization between a transmitting end and a receiving end are also high. Therefore, maintenance of a plurality of time windows causes the overheads to multiply. In contrast, in the RBM in this embodiment of this disclosure, because the channel assessment is performed for only a single time window, storage and signaling overheads are only a fraction (1/8 in this example) of that in the PLC broadband communication.

In addition, in comparison with the ROBO mode in which low-order bit modulation is always used and repeated coding is used, the RBM can greatly improve communication efficiency per unit resource. Table 3 below shows an example of comparison of between performances of the RBM and the ROBO mode. It is assumed that bandwidths are the same.

**Table 3 Example of comparison between performances of the RBM and the ROBO/RCM mode**

| | ROBO/RCM | RBM |
|---|---|---|
| Physical layer parameter | 25 MHz Bandplan | 25 MHz Bandplan |
| | QPSK | 64 QAM in average |
| | FEC rate = 5/6 | FEC rate = 5/6 |
| | REP = 4 | |
| Resource consumption | Occupy all slots | Occupy 1/8 slots |
| Bit rate | 7.7 Mbps | 11.6 Mbps |

It can be learned that, in a case of a same bandwidth, a higher rate performance can be provided by only occupying 1/8 resources.

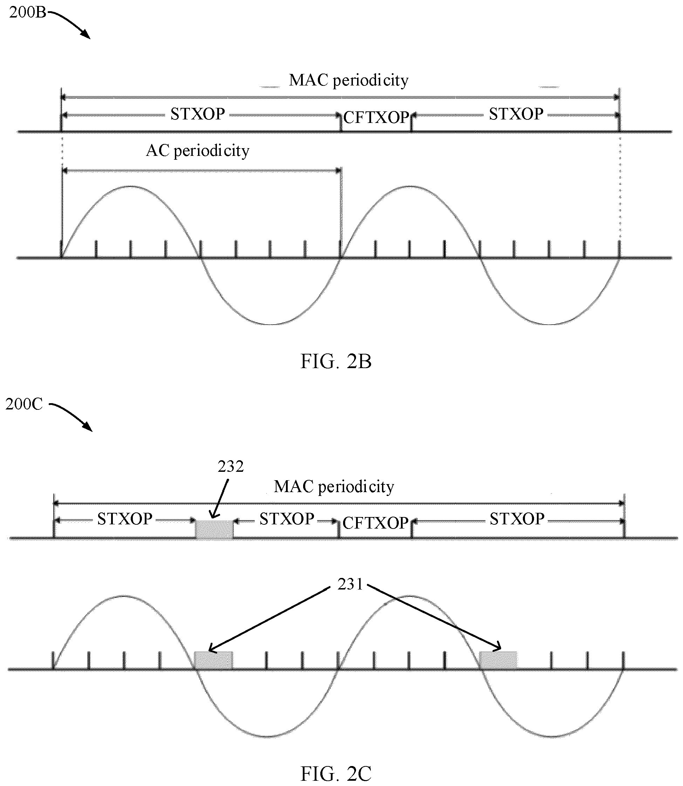

For the MAC layer, the DM needs to allocate communication resources to the IoT node. FIG. 2B is a schematic diagram 200B of TXOP allocation in a non-RBM according to an embodiment of this disclosure. As shown in FIG. 2B, in the non-RBM, the DM usually allocates a contention-free transmission slot (CFTS, Contention-free Time Slot) from a shared transmission opportunity (STXOP, Shared Transmission Opportunity) to the IoT node.

According to this embodiment of this disclosure, in the RBM, the IoT node transmits data using and only using a specific window. Therefore, for the MAC layer, the DM needs to allocate a resource at a location of the window to the IoT node. For example, when entering the RBM, a specific TXOP needs to be allocated to the IoT node. The DM needs to change the TXOP allocation to adapt to a new requirement. FIG. 2C is a schematic diagram 200C of TXOP allocation in an RBM according to an embodiment of this disclosure. As shown in FIG. 2C, when entering the RBM, after a time window 231 is determined for the IoT node, the DM MAC needs to allocate a TXOP resource 232 to a location of the window. In some embodiments, the TXOP resource 232 may be a CFTXOP, and the CFTXOP is allocated to the IoT node. In some alternative embodiments, the TXOP resource 232 may be an STXOP, and a CFTS with the highest priority in the STXOP is allocated to the IoT node. In some embodiments, one MAC periodicity includes two AC periodicities. In this case, one or two CFTXOPs or STXOPs may be determined, based on a bit rate requirement, to be allocated to the IoT node.

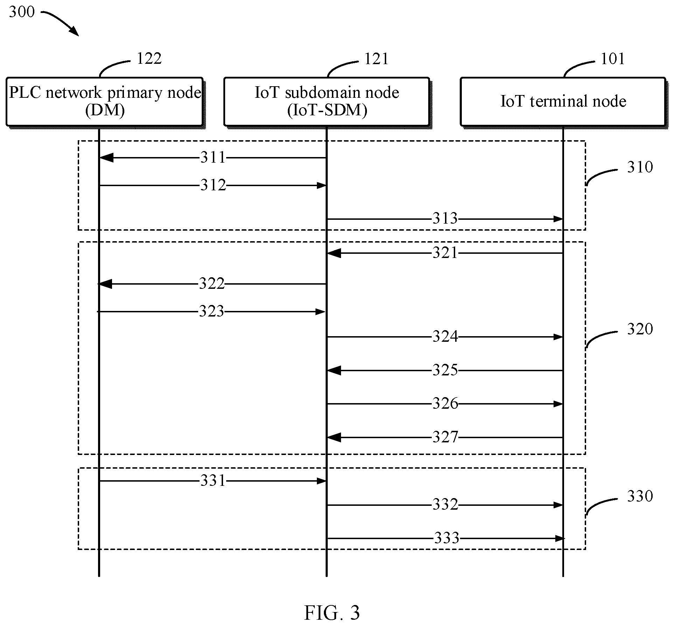

According to this embodiment of this disclosure, when there are hundreds of IoT nodes in the PLC network, not all IoT nodes have a consistently high bit rate requirement, but most IoT nodes are at a low rate in most of the time. Therefore, the BAT does not need to be maintained for all IoT nodes, and only a few IoT nodes need to work in the RBM if necessary. In some embodiments of this disclosure, the RBM and the ROBO mode may be combined for communication of the IoT node. For example, the RBM is entered in a high-rate scenario (for example, when a transmission rate is higher than a predetermined threshold rate) or under upper-layer control, and the ROBO mode is used in other time. Therefore, because the RBM is entered only when there is a demand, overheads of a convergence node are greatly reduced. The convergence node is a node that communicates with plurality of nodes in an IoT tree network or star network. For ease of understanding, the following provides more detailed descriptions with reference to FIG. 3 to FIG. 6.

FIG. 3 is a schematic diagram of a process 300 of entering an RBM in a downlink direction according to an embodiment of this disclosure. For convenience, the following describes FIG. 3 with reference to the example in FIG. 1. In this example, the downlink direction means data transmission from the IoT-SDM 121 to the IoT terminal node 101. In this case, the IoT-SDM 121 is a sending device, the IoT terminal node 101 is a receiving device, and the DM 122 is a control device. It should be understood that the process in FIG. 3 may also be applicable to data transmission from the IoT-SDM 121 to another IoT terminal node in the network 100. It should be further understood that the process in FIG. 3 may include other additional processes that are not shown, or some processes shown may be omitted. The scope of this disclosure is not limited thereto.

In this embodiment, the process 300 in FIG. 3 may include a process 310 of negotiating to enter the RBM, a process 320 of channel assessment, and a process 330 of data transmission (which may also be referred to as a process 330 of resource allocation).

The IoT-SDM 121 may initiate the process 310 of negotiating to enter the RBM. As shown in FIG. 3, the IoT-SDM 121 may send 311, to the DM 122, a request (also referred to as a second request in this specification for convenience) for entering the RBM. For example, the IoT-SDM 121 may send an RBM_enter.req message to the DM 122. It is clear that, a form of the message is not limited in this embodiment of this disclosure, but any other suitable form may be used.

In some embodiments, the IoT-SDM 121 may monitor a rate of data transmission and send the request when the rate of data transmission is greater than the predetermined threshold rate. In some embodiments, the predetermined threshold rate may be dynamically configured based on a requirement. In some embodiments, the predetermined threshold rate of the threshold may be preconfigured. In some alternative embodiments, the IoT-SDM 121 may monitor a service type of data transmission and send the request when the service type is a predetermined service type. For example, the predetermined service type indicates high-rate data transmission. In some alternative embodiments, the IoT-SDM 121 may send the request in response to receiving an instruction (also referred to as a first instruction in this specification for convenience) to enter the RBM. In some embodiments, the instruction may come from upper layer control, for example, the MAC layer or an application layer. It should be understood that the IoT-SDM 121 may send the request under any other appropriate triggering condition. This is not limited to the foregoing examples.

If the DM 122 rejects the request, the DM 122 may send a negative response (not shown) to the request to the IoT-SDM 121. For example, the DM 122 may send an RBM_enter.dec message to the IoT-SDM 121. It is clear that a form of the message is not limited in this embodiment of this disclosure, but any other suitable form may be used. At this point, the process 300 ends.

If the DM 122 accepts the request, the DM 122 may send 312 a positive response to the request to the IoT-SDM 121. For example, the DM 122 may send an RBM_enter.cnf message to the IoT-SDM 121. It is clear that a form of the message is not limited in this embodiment of this disclosure, but any other suitable form may be used.

In response to receiving the positive response, the IoT-SDM 121 may send 313, to the IoT terminal node 101, a notification (also referred to as a first notification in this specification for convenience) of entering the RBM. For example, the IoT-SDM 121 may send an RBM_enter.cnf message to the IoT terminal node 101. It is clear that a form of the message is not limited in this embodiment of this disclosure, but any other suitable form may be used. At this point, the process 310 of negotiating to enter the RBM is completed, and the RBM is entered.

In the RBM, the IoT terminal node 101 may initiate the process 320 of channel assessment. As shown in FIG. 3, the IoT terminal node 101 sends 321, to the IoT-SDM 121, a request (also referred to as the first request in this specification for convenience) that requests to perform channel assessment for a single time window (also referred to as a first time window in this specification for convenience) in a power line communication periodicity. For example, the IoT terminal node 101 may select a BAT region (namely, a time window), and include information about the selected BAT region (for example, an identity (ID, Identity) or similar information) in the request. For example, the IoT terminal node 101 may send a CE_Initiation.req message as the request to the IoT-SDM 121. It is clear that any other suitable form of the message may also be used.

In response to the request for channel assessment, the IoT-SDM 121 may send 322 a request (also referred to as a third request in this specification for convenience) for resource allocation of the sounding signal to the DM 122. The request includes the information about the selected BAT region. For example, the IoT-SDM 121 may send a CE_ProbeSlotAssign.req message to the DM 122 as the request. It is clear that any other suitable form of the message may also be used.

In response to the request for the resource allocation, the DM 122 may send 323 information about the resource allocation to the IoT-SDM 121. That is, the DM 122 allocates a resource for the sounding signal to the IoT-SDM 121. For example, the DM 122 may send a CE_ProbeSlotAssign.cnf message to the IoT-SDM 121 to allocate the resource. It is clear that any other suitable form of the message may also be used.

Then, the IoT-SDM 121 may send 324 a positive response to the first request to the IoT terminal node 101. For example, the IoT-SDM 121 may send a CE_Initiation.cnf message to the IoT terminal node 101. It is clear that any other suitable form of the message may also be used.

In response to the positive response, the IoT terminal node 101 may send 325, to the IoT-SDM 121, a request (also referred to as a fourth request in this specification for convenience) for sending the sounding signal. For example, the IoT terminal node 101 may send a CE_ProbeRequest.ind message to the IoT-SDM 121 to request to send the sounding signal. In some embodiments, the sounding signal may be a probe frame (PROBE frame) or a channel training sequence. It is clear that the sounding signal is not limited thereto, but may take any other suitable form.

In response to the request of the sounding signal, the IoT-SDM 121 may send 326 a sounding signal to the IoT terminal node 101. By using the sounding signal, the IoT terminal node 101 may perform channel assessment, to determine the modulation parameter. The channel assessment may be implemented in any suitable manner known in the art or developed in the future. This is not limited herein. It should be understood that the IoT terminal node 101 may need a plurality of sounding signals to complete channel assessment. In this case, processes of requesting for and sending the sounding signal (that is, the processes shown in 325 and 326) may need to be performed for a plurality of times.

Then, the IoT terminal node 101 sends 327 the determined modulation parameter to the IoT-SDM 121, so that the determined modulation parameter is used for data transmission in the selected time window. At this point, the process 320 of channel assessment is completed. Then, a process of data transmission 330 is entered.

Refer to FIG. 3. The DM 122 may send 331 information about a transmission opportunity to the IoT-SDM 121, where the transmission opportunity covers the first time window. For example, the DM 122 may generate new TXOP allocation based on information about the first time window, and send a MAP message including the new TXOP allocation to the IoT-SDM 121. In some embodiments, there may be a CFTXOP in the new TXOP allocation, where the CFTXOP covers a location of the BAT region selected for the IoT terminal node 101. For example, the CFTXOP may correspond to BAT_ID=x. In some alternative embodiments, there may be an STXOP in the new TXOP allocation, where the STXOP covers the location of the BAT region selected for the IoT terminal node 101. In the STXOP, a CFTS with the highest priority may be allocated to the IoT terminal node 101. It is clear that this embodiment of this disclosure is not limited thereto, and any other suitable TXOP allocation manner may also be used. The following uses the CFTXOP as an example.

The IoT-SDM 121 may send 332 the information about the transmission opportunity to the IoT terminal node 101. For example, the IoT-SDM 121 may send an IoT-MAP message to the IoT terminal node 101, where the loT-MAP message includes CFTXOP allocation for the IoT-SDM 121.

Then, the IoT-SDM 121 may perform downlink IoT data transmission 333 with the IoT terminal node 101 based on a received modulation parameter by using the CFTXOP.

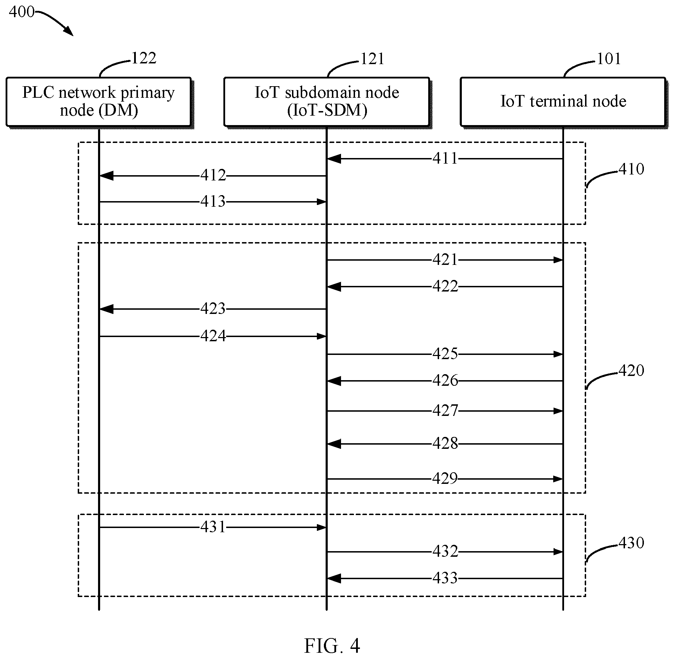

FIG. 4 is a schematic diagram of a process 400 of entering an RBM in an uplink direction according to an embodiment of this disclosure. For convenience, the following describes FIG. 4 with reference to the example in FIG. 1. In this example, the uplink direction means data transmission from the IoT terminal node 101 to the IoT-SDM 121. In this case, the IoT terminal node 101 is a sending device, the loT-SDM 121 is a receiving device, and the DM 122 is a control device. It should be understood that the process in FIG. 4 may also be applicable to data transmission from another IoT terminal node in the network 100 to the loT-SDM 121. It should be further understood that the process in FIG. 4 may include other additional processes that are not shown, or some processes shown may be omitted. The scope of this disclosure is not limited thereto.

In this embodiment, the process 400 in FIG. 4 may include a process 410 of negotiating to enter the RBM, a process 420 of channel assessment, and a process 430 of data transmission (which may also be referred to as a process 430 of resource allocation).

The IoT terminal node 101 may initiate the process 410 of negotiating to enter the RBM. The IoT terminal node 101 may send, to the DM 122 through the IoT-SDM 121, the request (also referred to as the second request in this specification for convenience) for entering the RBM. As shown in FIG. 4, the IoT terminal node 101 may send 411 a request for entering the RBM to the IoT-SDM 121, and the IoT-SDM 121 forwards 412 the request to the DM 122. For example, the IoT terminal node 101 may send an RBM_enter.req message to the IoT-SDM 121, and the IoT-SDM 121 forwards the message to the DM 122. It is clear that a form of the message is not limited in this embodiment of this disclosure, but any other suitable form may be used.

In some embodiments, the IoT terminal node 101 may monitor a rate of data transmission, and send the request when the rate of data transmission is greater than a predetermined threshold rate. In some embodiments, the predetermined threshold rate may be dynamically configured based on a requirement. In some embodiments, the predetermined threshold rate of the threshold may be preconfigured. In some alternative embodiments, the IoT terminal node 101 may monitor a service type of data transmission, and send the request when the service type is a predetermined service type. For example, the predetermined service type indicates high-rate data transmission. In some alternative embodiments, the IoT terminal node 101 may send the request in response to receiving an instruction (also referred to as a first instruction in this specification for convenience) to enter the RBM. In some embodiments, the instruction may come from upper layer control, for example, a MAC layer or an application layer. It should be understood that the IoT terminal node 101 may send the request under any other appropriate triggering condition. This is not limited to the foregoing example.

If the DM 122 rejects the request, the DM 122 may send a negative response (not shown) to the request to the IoT-SDM 121. For example, the DM 122 may send an RBM_enter.dec message to the IoT-SDM 121. It is clear that a form of the message is not limited in this embodiment of this disclosure, but any other suitable form may be used. At this point, the process 400 ends.

If the DM 122 accepts the request, the DM 122 may send 413 a positive response to the request to the IoT-SDM 121. For example, the DM 122 may send an RBM_enter.cnf message to the IoT-SDM 121. It is clear that a form of the message is not limited in this embodiment of this disclosure, but any other suitable form may be used.

In response to receiving the positive response, the IoT-SDM 121 determines to enter the RBM and may initiate the process 420 of channel assessment. As shown in FIG. 4, the IoT-SDM 121 sends 421, to the IoT terminal node 101, a request that requests to perform channel assessment (also referred to as a first request in this specification for convenience) for a single time window (also referred to as a first time window in this specification for convenience) in the power line communication periodicity. For example, the IoT-SDM 121 may select a BAT region (namely, a time window) and include information about a selected BAT region (for example, a BAT region ID or similar information) in the request. For example, the IoT-SDM 121 may send a CE_Initiation.req message as the request to the IoT terminal node 101. It is clear that any other suitable form of the message may also be used.

In response to the request for channel assessment, the IoT terminal node 101 may send a request (also referred to as a third request in this specification for convenience) for resource allocation of a sounding signal to the DM 122 through the loT-SDM 121. The request includes the information about the selected BAT region. For example, the IoT terminal node 101 may send 422 a CE_ProbeSlotAssign.req message to the IoT-SDM 121 as the request and the IoT-SDM 121 forwards 423 the message to the DM 122. It is clear that any other suitable form of the message may also be used.

In response to the request for resource allocation, the DM 122 may send information about resource allocation to the IoT terminal node 101 through the IoT-SDM 121. For example, the DM 122 sends 424 information about resource allocation to the loT-SDM 121, and the IoT-SDM 121 forwards 425 the information to the IoT terminal node 101. That is, the DM 122 allocates a resource for the sounding signal to the IoT terminal node 101. For example, the DM 122 may send a CE_ProbeSlotAssign.cnf message to the IoT-SDM 121, and the IoT-SDM 121 forwards the message to the IoT terminal node 101 to allocate the resource. It is clear that any other suitable form of the message may also be used.

Then, the IoT terminal node 101 may send 426 a positive response to the first request to the loT-SDM 121. For example, the IoT terminal node 101 may send a CE_Initiation.cnf message to the IoT-SDM 121. It is clear that any other suitable form of the message may also be used.

In response to the positive response, the IoT-SDM 121 may send 427, to the IoT terminal node 101, a request (also referred to as a fourth request in this specification for convenience) for sending the sounding signal. For example, the IoT-SDM 121 may send a CE_ProbeRequest.ind message to the IoT terminal node 101 to request to send the sounding signal. In some embodiments, the sounding signal may be a probe frame (PROBE frame) or a channel training sequence. It is clear that the sounding signal is not limited thereto, but may take any other suitable form.

In response to the request of the sounding signal, the IoT terminal node 101 may send 428 a sounding signal to the IoT-SDM 121. By using the sounding signal, the IoT-SDM 121 may perform channel assessment to determine a modulation parameter. The channel assessment may be implemented in any suitable manner known in the art or developed in the future. This is not limited herein. It should be understood that the IoT-SDM 121 may need a plurality of sounding signals to complete channel assessment. In this case, processes of requesting for and sending the sounding signal (that is, processes shown in 427 and 428) may need to be performed for a plurality of times.

Then, the IoT-SDM 121 sends 429 the determined modulation parameter to the IoT terminal node 101, so that the determined modulation parameter is used for data transmission in a selected time window. At this point, the process 420 of channel assessment is completed. Then, the process 430 of data transmission is entered.

Refer to FIG. 4. The DM 122 may send 431 information about a transmission opportunity to the IoT-SDM 121, where the transmission opportunity covers the first time window. For example, the DM 122 may generate new TXOP allocation based on information about the first time window, and send a MAP message including the new TXOP allocation to the IoT-SDM 121. In some embodiments, there may be a CFTXOP in the new TXOP allocation, where the CFTXOP covers a location of the BAT region selected for the IoT terminal node 101. For example, the CFTXOP may correspond to BAT_ID=x. In some alternative embodiments, there may be an STXOP in the new TXOP allocation, where the STXOP covers the location of the BAT region selected for the IoT terminal node 101. In the STXOP, a CFTS with the highest priority may be allocated to the IoT terminal node 101. It is clear that this embodiment of this disclosure is not limited thereto, and any other suitable TXOP allocation manner may also be used. The following uses the CFTXOP as an example.

The IoT-SDM 121 may send 432 the information about the transmission opportunity to the IoT terminal node 101. For example, the IoT-SDM 121 may send an IoT-MAP message to the IoT terminal node 101, where the IoT-MAP message includes CFTXOP allocation for the IoT-SDM 121.

Then, the IoT terminal node 101 may perform uplink IoT data transmission 433 with the loT-SDM 121 based on the received modulation parameter by using the CFTXOP.

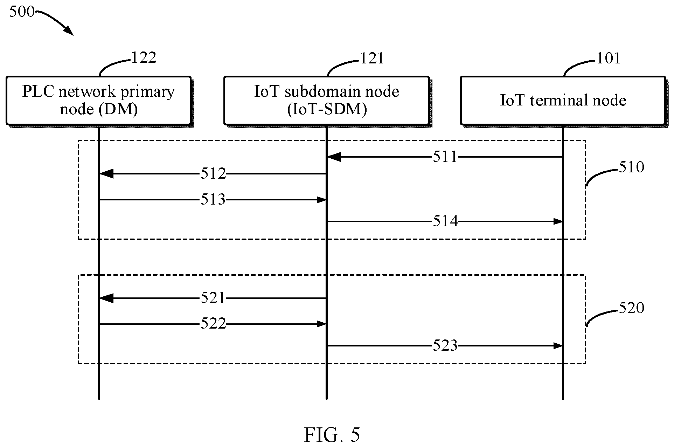

FIG. 5 is a schematic diagram of a process 500 of exiting an RBM according to an embodiment of this disclosure. For convenience, the following describes FIG. 5 with reference to the example in FIG. 1. The process 500 in this example is applicable to any uplink or downlink situation of exiting the RBM. It should be understood that the process in FIG. 5 may include other additional processes that are not shown, or some processes shown may be omitted. The scope of this disclosure is not limited thereto.

In this embodiment, a process 510 in FIG. 5 is a process of exiting the RBM in an uplink data transmission situation. In this case, the IoT terminal node 101 is a sending device, the IoT-SDM 121 is a receiving device, and the DM 122 is a control device. In an uplink data transmission situation, the process 510 may be initiated by the IoT terminal node 101.

As shown in FIG. 5, the IoT terminal node 101 may send, to the DM 122 through the IoT-SDM 121, a request (also referred to as a fifth request in this specification for convenience) for exiting the RBM. For example, the IoT terminal node 101 may send 511 the request to the IoT-SDM 121, and the IoT-SDM 121 forwards 512 the request to the DM 122. For example, the IoT terminal node 101 may send an RBM_exit.req message to the IoT-SDM 121, and the IoT-SDM 121 forwards the message to the DM 122. It is clear that any other suitable form of the message may also be used.

If the DM 122 accepts the request, the DM 122 may send a positive response to the request to the IoT terminal node 101 through the IoT-SDM 121. For example, the DM 122 may send 513 the request to the IoT-SDM 121, and the IoT-SDM 121 forwards 514 the request to the IoT terminal node 101. For example, the DM 122 may send an RBM_exit.cnf message to the IoT-SDM 121, and the IoT-SDM 121 forwards the message to the IoT terminal node 101. It is clear that any other suitable form of the message may also be used.

In some embodiments, when the IoT-SDM 121 receives the positive response, the IoT-SDM 121 may release a modulation parameter in a first time window, namely, a BAT for a selected BAT region. In some embodiments, when the IoT terminal node 101 receives the positive response, the IoT terminal node 101 may release the modulation parameter for the first time window, namely, the BAT for the selected BAT region.

Still refer to FIG. 5. A process 520 is a process of exiting the RBM in the downlink data transmission situation. In this case, the IoT-SDM 121 is the sending device, the IoT terminal node 101 is the receiving device, and the DM 122 is the control device. In a downlink data transmission situation, the process 520 may be initiated by the IoT-SDM 121.

As shown in FIG. 5, the IoT-SDM 121 may send 521, to the DM 122, the request (also referred to as the fifth request in this specification for convenience) for exiting the RBM. For example, the IoT-SDM 121 may send the RBM_exit.req message to the DM 122. It is clear that any other suitable form of the message may also be used.

If the DM 122 accepts the request, the DM 122 may send 522 the 632positive response to the request to the IoT-SDM 121. For example, the DM 122 may send the RBM_exit.cnf message to the IoT-SDM 121. It is clear that any other suitable form of the message may also be used.

In response to receiving the positive response, the IoT-SDM 121 may send 523, to the IoT terminal node 101, a notification (also referred to as a second notification in this specification for convenience) of exiting the RBM. For example, the DM 122 may forward the RBM_exit.cnf message to the IoT-SDM 121. It is clear that any other suitable form of the message may also be used.

In some embodiments, when the IoT-SDM 121 receives the positive response, the IoT-SDM 121 may release the modulation parameter for the first time window, namely, the BAT for the selected BAT region. In some embodiments, when the IoT terminal node 101 receives the notification, the IoT terminal node 101 may release the modulation parameter for the first time window, namely, the BAT for the selected BAT region.

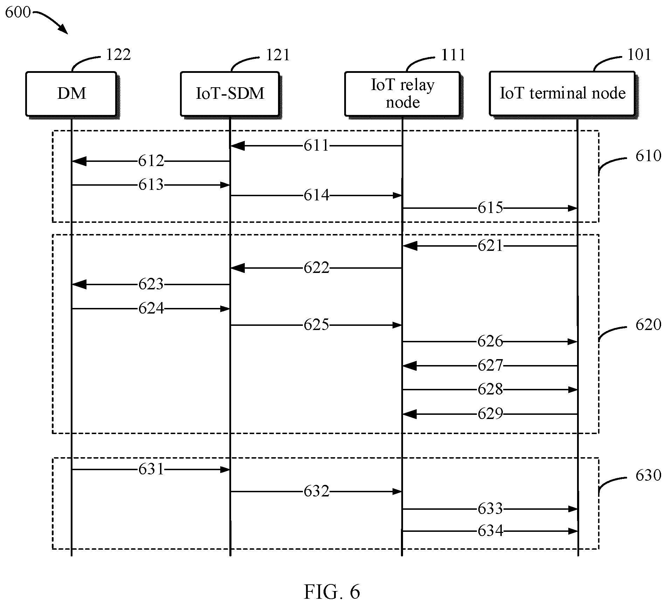

In the embodiments described above with reference to FIG. 3 to FIG. 5, communication between the IoT-SDM 121 and the IoT terminal node 101 is used as an example for description. However, in some embodiments, communication between the IoT-SDM 121 and the IoT terminal node 101 in the foregoing processes may alternatively be completed by using one or more IoT relay nodes. In addition, in some embodiments, the RBM may also be used for communication between the IoT relay node and the IoT terminal node. For ease of understanding, the following provides descriptions in more detail with reference to FIG. 6.

FIG. 6 is a schematic diagram of another process 600 of entering an RBM in a downlink direction according to an embodiment of this disclosure. For convenience, the following describes FIG. 6 with reference to the example in FIG. 1. In this example, the downlink direction means data transmission from the IoT relay node 111 to the IoT terminal node 101. In this case, the IoT relay node 111 is a sending device, the IoT terminal node 101 is a receiving device, and the DM 122 is a control device. It should be understood that the process in FIG. 6 may include other additional processes that are not shown, or some processes shown may be omitted. The scope of this disclosure is not limited thereto.

In this embodiment, the process 600 in FIG. 6 may include a process 610 of negotiating to enter the RBM, a process 620 of channel assessment, and a process 630 of data transmission (which may also be referred to as a process 630 of resource allocation).

The IoT relay node 111 may initiate the process 610 of negotiating to enter the RBM. In some embodiments, the IoT relay node 111 may send, to the DM 122 through the IoT-SDM 121, a request for entering the RBM (also referred to as a second request in this specification for convenience). As shown in FIG. 6, the IoT relay node 111 may send 611 the request to the IoT-SDM 121, and the IoT-SDM 121 may forward 612 the request to the DM 122. For example, the IoT relay node 111 may send an RBM_enter.req message to the IoT-SDM 121, and the IoT-SDM 121 forwards the message to the DM 122. It is clear that a form of the message is not limited in this embodiment of this disclosure, but any other suitable form may be used.

In some embodiments, the IoT relay node 111 may monitor a rate of data transmission and send the request when the rate of data transmission is greater than a predetermined threshold rate. In some embodiments, the predetermined threshold rate may be dynamically configured based on a requirement. In some embodiments, the predetermined threshold rate of the threshold may be preconfigured. In some alternative embodiments, the IoT relay node 111 may monitor a service type of data transmission and send the request when the service type is a predetermined service type. For example, the predetermined service type indicates high-rate data transmission. In some alternative embodiments, the IoT relay node 111 may send the request in response to receiving an instruction (also referred to as a first instruction in this specification for convenience) to enter the RBM. In some embodiments, the instruction may come from upper layer control, for example, a MAC layer or an application layer. It should be understood that the IoT relay node 111 may send the request under any other appropriate triggering condition. This is not limited to the foregoing example.

If the DM 122 rejects the request, the DM 122 may send a negative response (not shown) to the request to the IoT-SDM 121. For example, the DM 122 may send an RBM_enter.dec message to the IoT-SDM 121. It is clear that the form of the message is not limited in this embodiment of this disclosure, but any other suitable form may be used. At this point, the process 600 ends.

If the DM 122 accepts the request, the DM 122 may send 613 a positive response to the request to the IoT-SDM 121, and the IoT-SDM 121 forwards 614 the positive response to the IoT relay node 111. For example, the DM 122 may send an RBM_enter.cnf message to the IoT-SDM 121, and the IoT-SDM 121 forwards the message to the IoT relay node 111. It is clear that the form of the message is not limited in this embodiment of this disclosure, but any other suitable form may be used.

In response to receiving the positive response, the IoT relay node 111 may send 615, to the IoT terminal node 101, a notification (also referred to as a first notification in this specification for convenience) of entering the RBM. For example, the IoT relay node 111 may send the RBM_enter.cnf message to the IoT terminal node 101. It is clear that the form of the message is not limited in this embodiment of this disclosure, but any other suitable form may be used. At this point, the process 610 of negotiating to enter the RBM is completed, and the RBM is entered.

In the RBM, the IoT terminal node 101 may initiate the process 620 of channel assessment. As shown in FIG. 6, the IoT terminal node 101 sends 621, to the IoT relay node 111, a request (also referred to as a first request in this specification for convenience) that requests to perform channel assessment for a single time window (also referred to as a first time window in this specification for convenience) in a power line communication periodicity. For example, the IoT terminal node 101 may select a BAT region (namely, a time window), and include information about the selected BAT region (for example, a BAT region ID or similar information) in the request. For example, the IoT terminal node 101 may send a CE_Initiation.req message as the request to the IoT relay node 111. It is clear that any other suitable form of the message may also be used.

In response to the request for channel assessment, the IoT relay node 111 may send, to the DM 122 through the IoT-SDM 121, the request (also referred to as a third request in this specification for convenience) for resource allocation of the sounding signal. The request includes information about the selected BAT region. In some embodiments, the IoT relay node 111 may send 622 the request for resource allocation to the IoT-SDM 121, and the IoT-SDM 121 may forward 623 the request for resource allocation to the DM 122. For example, the IoT relay node 111 may send a CE_ProbeSlotAssign.req message to the IoT-SDM 121, and the IoT-SDM 121 forwards the message to the DM 122. It is clear that any other suitable form of the message may also be used.

In response to the request for resource allocation, the DM 122 may send information about resource allocation to the IoT relay node 111 through the IoT-SDM 121. That is, the DM 122 allocates a resource for sending the sounding signal to the IoT relay node 111. In some embodiments, the DM 122 may send the information about resource allocation to the IoT-SDM 121, and the IoT-SDM 121 forwards the information to the IoT relay node 111. For example, the DM 122 may send a CE_ProbeSlotAssign.cnf message to the IoT-SDM 121, and the IoT-SDM 121 forwards the message to the IoT relay node 111 to allocate resources. It is clear that any other suitable form of the message may also be used.

In response to receiving the information about resource allocation, the IoT relay node 111 may send 626 a positive response to the first request to the IoT terminal node 101. For example, the IoT relay node 111 may send a CE_Initiation.cnf message to the IoT terminal node 101. It is clear that any other suitable form of the message may also be used.

In response to the positive response, the IoT terminal node 101 may send 627, to the IoT relay node 111, a request for sending a sounding signal (also referred to as a fourth request in this specification for convenience). For example, the IoT terminal node 101 may send a CE_ProbeRequest.ind message to the IoT relay node 111 to request to send the sounding signal. In some embodiments, the sounding signal may be a probe frame (PROBE frame) or a channel training sequence. It is clear that the sounding signal is not limited thereto, but may take any other suitable form.

In response to the request of the sounding signal, the IoT relay node 111 may send 628 the sounding signal to the IoT terminal node 101. By using the sounding signal, the IoT terminal node 101 may perform channel assessment to determine the modulation parameter. The channel assessment may be implemented in any suitable manner known in the art or developed in the future. This is not limited herein. It should be understood that the IoT terminal node 101 may need a plurality of sounding signals to complete channel assessment. In this case, processes of requesting for and sending the sounding signal (that is, processes shown in 627 and 628) may need to be performed for a plurality of times.

Then, the IoT terminal node 101 sends 629 the determined modulation parameter to the IoT terminal node 101, so that the modulation parameter is used for data transmission in the selected time window. At this point, the process 620 of channel assessment is completed. Then, the process 630 of data transmission is entered.

Refer to FIG. 6. The DM 122 may send 631 information about a transmission opportunity to the IoT-SDM 121, where the transmission opportunity covers the first time window. For example, the DM 122 may generate new TXOP allocation based on information about the first time window, and send a MAP message including the new TXOP allocation to the IoT-SDM 121. In some embodiments, there may be a CFTXOP in the new TXOP allocation, where the CFTXOP covers a location of the BAT region selected for the IoT terminal node 101. For example, the CFTXOP may correspond to BAT_ID=x. In some alternative embodiments, there may be an STXOP in the new TXOP allocation, where the STXOP covers the location of the BAT region selected for the IoT terminal node 101. In the STXOP, a CFTS with the highest priority may be allocated to the IoT terminal node 101. It is clear that this embodiment of this disclosure is not limited thereto, and any other suitable TXOP allocation manner may also be used. The following uses the CFTXOP as an example.

The IoT-SDM 121 may send 632 the information about the transmission opportunity to the IoT relay node 111. For example, the loT-SDM 121 may send an IoT-MAP message to the IoT relay node 111, where the IoT-MAP message includes the CFTXOP allocation for the IoT relay node 111. The IoT relay node 111 may send 633 the information about the transmission opportunity to the IoT terminal node 101. For example, the IoT relay node 111 may send the IoT-MAP message to the IoT terminal node 101, where the IoT-MAP message includes the CFTXOP allocation for the IoT relay node 111.

Then, the IoT relay node 111 may perform downlink IoT data transmission 634 with the IoT terminal node 101 based on a received modulation parameter by using the CFTXOP. It should be understood that the foregoing processes described with reference to FIG. 3 to FIG. 6 are merely examples, and embodiments of this disclosure are not limited thereto, but the RBM may be implemented in any appropriate manner.

According to the proposed solutions in embodiments of this disclosure, an ability to train for a single time window to approach the channel limit may be retained outside of a ROBO mode. In normal cases, an RBM mode is disabled in low-traffic status. The RBM mode is started based on historical traffic or upper-layer triggering to increase a rate. Therefore, complexity of an IoT chip can be maintained. In addition, a corresponding slot is fixedly scheduled for an IoT node based on scheduling of a selected time window through collaboration between a physical layer and a MAC layer. Therefore, high rate performance and resource utilization efficiency can be achieved by using a small quantity of resources when there is limited complexity improvement.

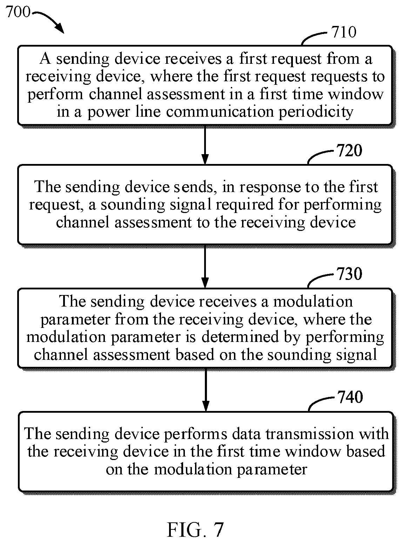

Corresponding to the RBM process described above, embodiments of this disclosure provide a method of PLC for IoT implemented at a sending device, a method of PLC for IoT implemented at a receiving device, and a method of PLC for IoT implemented at a control device. FIG. 7 is a flow chart of a method 700 of PLC for IoT implemented at a sending device according to an embodiment of this disclosure. The method 700 may be implemented at the sending device (for example, the IoT-SDM 121, the IoT relay node 111, or the IoT terminal node 101) in a PLC IoT network. For convenience, FIG. 7 is described herein with reference to the example in FIG. 1. It should be understood that the method in FIG. 7 may include other additional steps that are not shown, or some steps shown may be omitted. The scope of this disclosure is not limited thereto.

As shown in FIG. 7, at a block 710, the sending device receives a first request from the receiving device, where the first request requests to perform channel assessment in a first time window in a power line communication periodicity. In some embodiments, the sending device may be the IoT-SDM 121, and the receiving device may be the IoT terminal node 101. In some embodiments, the sending device may be the IoT terminal node 101, and the receiving device may be the IoT-SDM 121. In some embodiments, the sending device may be the IoT relay node 111, and the receiving device may be the IoT terminal node 101. In some embodiments, the sending device may be the IoT terminal node 101, and the receiving device may be the IoT relay node 111.

In some embodiments, the sending device may send, to the receiving device, a first notification of entering a first mode, where in the first mode, the sending device and the receiving device perform data transmission based on at least one time window in the power line communication periodicity. Then, the sending device may receive the first request sent by the receiving device in response to the first notification. In some embodiments, the first mode is an RBM.

In some embodiments, in response to a rate of data transmission being greater than a predetermined threshold rate, the sending device may send a second request for entering the first mode to the control device (for example, the DM 122). In response to receiving a positive response to the second request from the DM 122, the sending device may send the first notification to the receiving device. In some alternative embodiments, in response to receiving a first instruction to enter the first mode, the sending device may send the second request for entering the first mode to the DM 122. In response to receiving the positive response to the second request from the DM 122, the sending device may send the first notification to the receiving device.

At a block 720, in response to the first request, the sending device sends a sounding signal required for performing channel assessment to the receiving device. In some embodiments, the sending device may send a third request for resource allocation of the sounding signal to the DM 122, where the third request includes information about the first time window. In response to receiving information about resource allocation from the DM 122, the sending device may send a positive response to the first request to the receiving device. In response to receiving a fourth request for sending the sounding signal from the receiving device, the sending device may send the sounding signal to the receiving device based on the information about resource allocation.

At a block 730, the sending device receives a modulation parameter from the receiving device, where the modulation parameter is determined by the receiving device by performing channel assessment based on the sounding signal.

At a block 740, the sending device performs data transmission with the receiving device in the first time window based on the modulation parameter. In some embodiments, the sending device receives information about a transmission opportunity from the DM 122, where the transmission opportunity covers the first time window. Then, the sending device may send data to the receiving device at the transmission opportunity by using the modulation parameter. In some embodiments, the sending device may send the information about the transmission opportunity to the receiving device, so that the receiving device receives the data.

In some embodiments, the sending device may send a second notification of exiting the first mode to the receiving device. In some embodiments, the sending device may send a fifth request for exiting the first mode to the DM 122 in response to the rate of data transmission being less than the predetermined threshold rate, and send the second notification to the receiving device in response to receiving a positive response to the fifth request from the DM 122. In some alternative embodiments, the sending device may send the fifth request for exiting the first mode to the DM 122 in response to receiving a second instruction to exit the first mode, and send the second notification to the receiving device in response to receiving the positive response to the fifth request from the DM 122. In some embodiments, the sending device may release the modulation parameter in response to receiving the positive response to the fifth request from the DM 122. Therefore, maintenance costs of the modulation parameter are reduced.

The foregoing processing described in FIG. 7 corresponds to corresponding operations in FIG. 3 to FIG. 6. For other details, refer to related descriptions in FIG. 3 to FIG. 6. Details are not described herein again. According to the method in FIG. 7, an operation of sending data by a PLC IoT network node in the RBM may be completed. Data transmission efficiency is greatly improved compared with that in the ROBO mode.

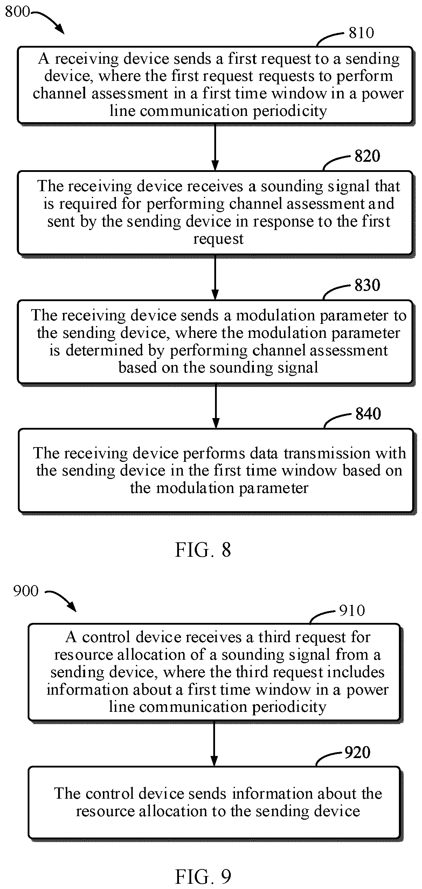

Correspondingly, an embodiment of this disclosure further provides a method of PLC for the IoT implemented at a receiving device. FIG. 8 is a flowchart of a method 800 of PLC for the IoT implemented at a receiving device according to an embodiment of this disclosure. The method 800 may be implemented at the receiving device (for example, the IoT-SDM 121, the IoT relay node 111, or the IoT terminal node 101) in a PLC IoT network. For convenience, FIG. 8 is described herein with reference to the example in FIG. 1. It should be understood that the method in FIG. 8 may include other additional steps that are not shown, or some steps shown may be omitted. The scope of this disclosure is not limited thereto.

As shown in FIG. 8, at a block 810, the receiving device sends a first request to the sending device, where the first request requests to perform channel assessment in a first time window in a power line communication periodicity. In some embodiments, the sending device may be the IoT-SDM 121, and the receiving device may be the IoT terminal node 101. In some embodiments, the sending device may be the IoT terminal node 101, and the receiving device may be the IoT-SDM 121. In some embodiments, the sending device may be the IoT relay node 111, and the receiving device may be the IoT terminal node 101. In some embodiments, the sending device may be the IoT terminal node 101, and the receiving device may be the IoT relay node 111.

In some embodiments, the receiving device may receive a first notification of entering a first mode from the sending device, where in the first mode, the sending device and the receiving device perform data transmission based on at least one time window in the power line communication periodicity. In response to the first notification, the receiving device may send the first request to the sending device. In some embodiments, the first mode is an RBM.

At a block 820, the receiving device receives a sounding signal that is required for performing the channel assessment and that is sent by the sending device in response to the first request. In some embodiments, the receiving device may receive a positive response to the first request from the sending device. In response to the positive response, the receiving device may send, to the sending device, a fourth request for sending the sounding signal, and receive the sounding signal sent by the sending device in response to the fourth request.

At a block 830, the receiving device sends a modulation parameter to the sending device, where the modulation parameter is determined by the receiving device by performing channel assessment based on the sounding signal.

At a block 840, the receiving device and the sending device perform data transmission based on the modulation parameter in the first time window. In some embodiments, the receiving device receives information about a transmission opportunity from the sending device, where the transmission opportunity covers the first time window. Then, the receiving device may receive data from the sending device based on the transmission opportunity.

In some embodiments, the receiving device may receive a second notification of exiting the first mode from the sending device. In some embodiments, in response to receiving the second notification, the receiving device may release the modulation parameter. Therefore, maintenance costs of the modulation parameter are reduced.

The foregoing processing described in FIG. 8 corresponds to corresponding operations in FIG. 3 to FIG. 6. For other details, refer to related descriptions in FIG. 3 to FIG. 6. Details are not described herein again. According to the method in FIG. 8, an operation of receiving data by the PLC IoT network node in the RBM may be completed. Efficiency of receiving data is greatly improved compared with that in the ROBO mode.

Correspondingly, an embodiment of this disclosure further provides a method of PLC for the IoT implemented at a control device. FIG. 9 is a flowchart of a method 900 of PLC for IoT implemented at a control device according to an embodiment of this disclosure. The method 900 may be implemented at the control device (for example, the DM 122) in a PLC IoT network. For convenience, FIG. 9 is described herein with reference to the example in FIG. 1. It should be understood that the method in FIG. 9 may include other additional steps that are not shown, or some steps shown may be omitted. The scope of this disclosure is not limited thereto.

As shown in FIG. 9, at a block 910, the control device (for example, the DM 122) receives a third request for resource allocation of a sounding signal from the sending device, where the third request includes information about a first time window in a power line communication periodicity. The third request is sent by the sending device in response to a first request from the receiving device, where the first request requests to perform channel assessment in the first time window. In some embodiments, the sending device may be the IoT-SDM 121, and the receiving device may be the IoT terminal node 101. In some embodiments, the sending device may be the IoT terminal node 101, and the receiving device may be the IoT-SDM 121. In some embodiments, the sending device may be the IoT relay node 111, and the receiving device may be the IoT terminal node 101. In some embodiments, the sending device may be the IoT terminal node 101, and the receiving device may be the IoT relay node 111.

In some embodiments, before receiving the third request, the DM 122 may receive a second request for entering a first mode from the sending device, where in the first mode, the sending device and the receiving device perform data transmission based on at least one time window in the power line communication periodicity. The DM 122 may send a positive response to the second request to the sending device, so that the sending device may send a first notification of entering the first mode to the receiving device. In some embodiments, the first mode is an RBM.

At a block 920, the DM 122 sends information about resource allocation to the sending device. Therefore, the sending device may send a sounding signal to the receiving device based on the information, so that the receiving device can complete channel assessment based on the sounding signal, to determine the modulation parameter and send the modulation parameter to the sending device.

In some embodiments, the DM 122 may send information about a transmission opportunity to the sending device, where the transmission opportunity covers the first time window. In some embodiments, the DM 122 may receive a fifth request to exit the first mode from the sending device. In some embodiments, the DM 122 may send a positive response to the fifth request to the sending device.

The foregoing processing described in FIG. 9 corresponds to corresponding operations in FIG. 3 to FIG. 6. For other details, refer to related descriptions in FIG. 3 to FIG. 6. Details are not described herein again. According to the method in FIG. 9, an operation of controlling data transmission by the PLC IoT network node in the RBM may be completed. In comparison with the ROBO mode, in the RBM, the physical layer and MAC layer cooperate to greatly improve transmission performance of a unit resource and lock a slot location at the physical layer for data transmission.

In general, according to the solutions in embodiments of this disclosure, the RBM is introduced for IoT data transmission, and in the RBM, the sending device and the receiving device perform data transmission based on at least one time window in the power line communication periodicity. In this way, high rate performance is achieved by using a small quantity of resources, and resource utilization efficiency of the broadband node in communication is approximated. In this way, rate performance and resource utilization of each node in a PLC broadband and PLC IoT converged network are improved.

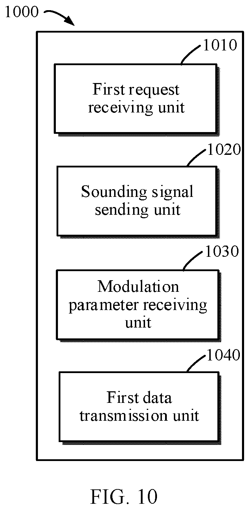

Corresponding to the foregoing methods, embodiments of this disclosure further provide an apparatus and a device of PLC for the IoT, which are described below with reference to FIG. 10 to FIG. 13. FIG. 10 is a schematic block diagram of an apparatus 1000 of PLC for the IoT implemented at a sending device according to an embodiment of this disclosure. The apparatus 1000 may be implemented at the sending device (for example, the loT-SDM 121, the IoT terminal node 101, or the IoT relay node 111 in FIG. 1) in a PLC IoT network. For convenience, the following describes FIG. 10 with reference to the example in FIG. 1. The apparatus 1000 may be a part of the sending device, or may be the sending device. It should be understood that the apparatus 1000 may include more additional components than the shown components, or some components shown in the apparatus 1000 may be omitted. This is not limited in this embodiment of this disclosure.

As shown in FIG. 10, the apparatus 1000 includes a first request receiving unit 1010, a sounding signal sending unit 1020, a modulation parameter receiving unit 1030, and a first data transmission unit 1040. The first request receiving unit 1010 is configured to receive a first request from a receiving device, where the first request requests to perform channel assessment in a first time window in a power line communication periodicity. The sounding signal sending unit 1020 is configured to send, in response to the first request, a sounding signal required for performing channel assessment to the receiving device. The modulation parameter receiving unit 1030 is configured to receive a modulation parameter from the receiving device, where the modulation parameter is determined by performing channel assessment based on the sounding signal. The first data transmission unit 1040 is configured to perform data transmission with the receiving device in the first time window based on the modulation parameter.

In some embodiments, the first request receiving unit 1010 may include a first notification sending unit and a request receiving unit. The notification sending unit may be configured to send a first notification of entering a first mode to the receiving device, where in the first mode, the sending device and the receiving device perform data transmission based on at least one time window in the power line communication periodicity. The request receiving unit may be configured to receive a first request sent by the receiving device in response to the first notification. In some embodiments, the first mode is an RBM.

In some embodiments, the notification sending unit may be configured to send a second request for entering the first mode to the control device in response to a rate of data transmission being greater than a predetermined threshold rate, and send the first notification to the receiving device in response to receiving a positive response to the second request from the control device. In some alternative embodiments, the notification sending unit may be configured to send the second request for entering the first mode to the control device in response to receiving a first instruction to enter the first mode, and send the first notification to the receiving device in response to receiving the positive response to the second request from the control device.

In some embodiments, the sounding signal sending unit 1020 may include a first sending unit, a second sending unit, and a third sending unit. The first sending unit may be configured to send a third request for resource allocation of the sounding signal to the control device, where the third request includes information about the first time window. The second sending unit may be configured to send a positive response to the first request to the receiving device in response to receiving information about resource allocation from the control device. The third sending unit is configured to send the sounding signal to the receiving device based on the information about resource allocation in response to receiving a fourth request for sending the sounding signal from the receiving device.

In some embodiments, the first data transmission unit 1040 may include a transmission opportunity receiving unit and a data transmission unit. The transmission opportunity receiving unit may be configured to receive information about a transmission opportunity from the control device, where the transmission opportunity covers the first time window. The data transmission unit may be configured to perform data transmission with the receiving device at the transmission opportunity by using the modulation parameter. In some embodiments, the first data transmission unit 1040 may further include a transmission opportunity sending unit, configured to send the information about the transmission opportunity to the receiving device.

In some embodiments, the apparatus 1000 may further include a second notification sending unit, configured to send a second notification of exiting the first mode to the receiving device. In some embodiments, the second notification sending unit may be configured to send a fifth request for exiting the first mode to the control device in response to a rate of data transmission being less than a predetermined threshold rate, and send the second notification to the receiving device in response to receiving a positive response to the fifth request from the control device. In some alternative embodiments, the second notification sending unit may be configured to send the fifth request for exiting the first mode to the control device in response to receiving a second instruction to exit the first mode, and send the second notification to the receiving device in response to receiving the positive response to the fifth request from the control device.

In some embodiments, the apparatus 1000 may further include a modulation parameter releasing unit, configured to release the modulation parameter in response to receiving the positive response to the fifth request from the control device.

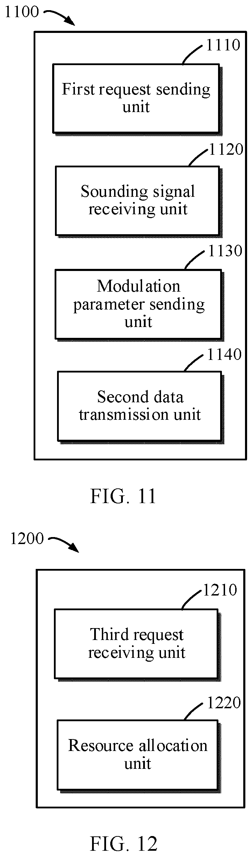

FIG. 11 is a schematic block diagram of an apparatus 1100 of PLC for the IoT implemented at a receiving device according to an embodiment of this disclosure. The apparatus 1100 may be the receiving device (for example, the IoT-SDM 121, the IoT terminal node 101, or the IoT relay node 111 in FIG. 1) in a PLC IoT network. For convenience, the following describes FIG. 11 with reference to the example in FIG. 1. The apparatus 1100 may be a part of the receiving device, or may be the receiving device. It should be understood that the apparatus 1100 may include more additional components than the shown components, or some components shown in the apparatus 1100 may be omitted. This is not limited in this embodiment of this disclosure.

As shown in FIG. 11, the apparatus 1100 includes a first request sending unit 1110, a sounding signal receiving unit 1120, a modulation parameter sending unit 1130, and a second data transmission unit 1140. The first request sending unit 1110 is configured to send a first request to the sending device, where the first request requests to perform channel assessment in a first time window in a power line communication periodicity. The sounding signal receiving unit 1120 is configured to receive a sounding signal that is required for performing channel assessment and that is sent by the sending device in response to the first request. The modulation parameter sending unit 1130 is configured to send a modulation parameter to the sending device, where the modulation parameter is determined by performing channel assessment based on the sounding signal. The second data transmission unit 1140 is configured to perform data transmission with the sending device in the first time window based on the modulation parameter.

In some embodiments, the first request sending unit 1110 may include a notification receiving unit and a request sending unit. The notification receiving unit may be configured to receive a first notification of entering a first mode from the sending device, where in the first mode, the sending device and the receiving device perform data transmission based on at least one time window in the power line communication periodicity. The request sending unit may be configured to send the first request to the sending device in response to the first notification. In some embodiments, the first mode is an RBM.

In some embodiments, the sounding signal receiving unit 1120 may include a first receiving unit, a sending unit, and a second receiving unit. The first receiving unit may be configured to receive a positive response to the first request from the sending device. The sending unit may be configured to send, to the sending device, a fourth request to send the sounding signal in response to the positive response. The second receiving unit may be configured to receive the sounding signal sent by the sending device in response to the fourth request.

In some embodiments, the second data transmission unit 1140 may include a transmission opportunity receiving unit and a data transmission unit. The transmission opportunity receiving unit may be configured to receive information about a transmission opportunity from the sending device, where the transmission opportunity covers the first time window. The data transmission unit may be configured to perform data transmission based on the transmission opportunity.

In some embodiments, the apparatus 1100 may further include a second notification receiving unit and a modulation parameter releasing unit. The second notification receiving unit may be configured to receive a second notification of exiting the first mode from the sending device. The modulation parameter releasing unit may be configured to release the modulation parameter in response to the second notification.

FIG. 12 is a schematic block diagram of an apparatus 1200 of PLC for the IoT implemented at a control device according to an embodiment of this disclosure. The apparatus 1200 may be implemented at the control device (for example, the DM 122 in FIG. 1) in a PLC IoT network. For convenience, the following describes FIG. 12 with reference to the example in FIG. 1. The apparatus 1200 may be a part of the DM 122 or the DM 122. It should be understood that the apparatus 1200 may include more additional components than the shown components, or some components shown in the apparatus 1200 may be omitted. This is not limited in this embodiment of this disclosure.

As shown in FIG. 12, the apparatus 1200 includes a third request receiving unit 1210 and a resource allocation unit 1220. The third request receiving unit 1210 is configured to receive a third request for resource allocation of a sounding signal from the sending device, where the third request includes information about a first time window in a power line communication periodicity. The third request is sent by the sending device in response to a first request from the receiving device, where the first request requests to perform channel assessment in the first time window. The resource allocation unit 1220 is configured to send information about resource allocation to the sending device.

In some embodiments, the apparatus 1200 may further include a second request receiving unit and a first response sending unit. The second request receiving unit may be configured to receive a second request of entering a first mode from the sending device, where in the first mode, the sending device and the receiving device perform data transmission based on at least one time window in the power line communication periodicity. The response sending unit may be configured to send a positive response to the second request to the sending device, so that a first notification of entering the first mode is sent to the receiving device. In some embodiments, the first mode is an RBM.

In some embodiments, the apparatus 1200 may further include a transmission opportunity sending unit, configured to send information about the transmission opportunity to the sending device, where the transmission opportunity covers the first time window. In some embodiments, the apparatus 1200 may further include a fifth request receiving unit and a second response sending unit. The fifth request receiving unit may be configured to receive a fifth request to exit the first mode from the sending device. The second response sending unit may be configured to send a positive response to the fifth request.

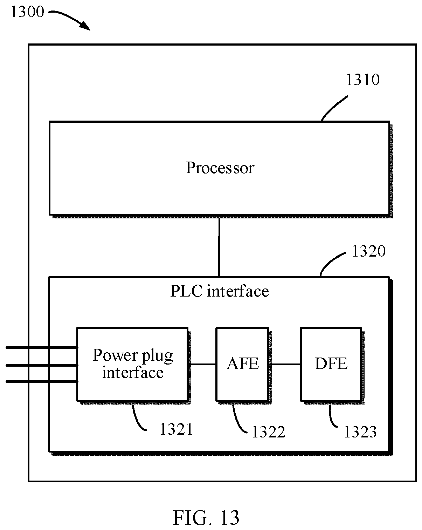

FIG. 13 is a simplified block diagram of a device 1300 suitable for implementing an embodiment of this disclosure. The device 1300 may be provided to implement a PLC IoT communication apparatus (a sending device or a receiving device) or a control device, for example, any one of the IoT-SDM 121, the DM 122, the IoT terminal node 101, and the IoT relay node 111 shown in FIG. 1. As shown in the figure, the device 1300 includes at least one processor 1310 and at least one PLC interface 1320 coupled to the at least one processor 1310. The PLC interface 1320 may include a power plug interface 1321, an analog front end (AFE, Analog Front End) 1322, and a digital front end (DFE, Digital Front End) 1323.

The power plug interface 1321 may be coupled to an external power plug. The power plug interface can represent any interface required by PLC. The AFE 1322 may include an analog signal processing component, and the DFE 1323 may include a digital signal processing component.

The processor 1310 may be of any type suitable for a local technology network, and as a limiting example, may include one or more of the following: a general purpose computer, a dedicated computer, a microprocessor, a digital signal processor, and a processor based on a multicore processor architecture. The device 1300 may have a plurality of processors, such as an application specific integrated circuit chip, and is subordinated in time to a clock synchronized with a main processor.

The processor 1310 may be operable to implement an embodiment of this disclosure through the PLC interface 1320, so that the device 1300 performs the processing of this disclosure as discussed with reference to FIG. 3 to FIG. 12. The device 1300 may be corresponding to the apparatus 1000, the apparatus 1100, or the apparatus 1200. Each function module in the apparatus 1000, the apparatus 1100, or the apparatus 1200 may be implemented through the processor 1310 in combination with the PLC interface 1320. An embodiment of this disclosure may also be implemented by software or by a combination of software and hardware.

In some embodiments, the device 1300 may further include a memory (not shown). The memory may include one or more nonvolatile memories and one or more volatile memories. Examples of the nonvolatile memory include, but are not limited to, a read-only memory (ROM), an electrically programmable read-only memory (EPROM), a flash memory, a hard disk, a compact disk (CD), a digital video disk (DVD), and another magnetic and/or optical storage apparatus. Examples of the volatile memory include, but are not limited to, a random access memory (RAM) and another volatile memory that do not persist for power outage duration. A computer program includes computer-executable instructions executed by the associated processor 1310. The program may be stored in the memory. The processor 1310 may perform any suitable action and processing by loading the program into the memory.

In general, various example embodiments of this disclosure may be implemented in hardware or a dedicated circuit, software, logic, or any combination thereof. Some aspects may be implemented in hardware, while other aspects may be implemented in firmware or software that may be performed by a controller, a microprocessor, or another computing device. When aspects of embodiments of this disclosure are illustrated or described as block diagrams, flowcharts, or represented by using some other figures, it may be understood that the blocks, apparatuses, systems, techniques, or methods described herein may be implemented, as non-limiting examples, in hardware, software, firmware, dedicated circuits or logic, general-purpose hardware or controllers, or other computing devices, or some combinations thereof. Examples of hardware devices that may be used to implement embodiments of this disclosure include, but are not limited to, a field programmable gate array (FPGA), an application-specific integrated circuit (ASIC), an application-specific standard product (ASSP), a system on chip (SOC), a complex programmable logic device (CPLD), and the like.

In an example, embodiments of this disclosure may be described in a context of machine-executable instructions. The machine-executable instructions are included in, for example, program modules executed in devices on a real or virtual processor of a target. In general, the program modules include routines, programs, libraries, objects, classes, components, data structures, and the like. The program modules perform specific tasks or implement specific abstract data structures. In various embodiments, functions of the program modules may be combined or split between the described program modules. The machine-executable instructions for the program modules may be executed locally or within a distributed device. In the distributed device, the program modules may be located in both local and remote storage media.

Computer program code for implementing the methods of this disclosure may be written in one or more programming languages. The computer program code may be provided to a processor of a general-purpose computer, a dedicated computer, or another programmable data processing apparatus, so that when the program code is executed by the computer or another programmable data processing apparatus, a function/operation specified in the flowchart and/or the block diagram is implemented. The program code may be executed entirely on a computer, partially on a computer, as an independent software package, partially on a computer and partially on a remote computer, or entirely on a remote computer or server.

In the context of this disclosure, computer program code or related data may be carried by any appropriate carrier to enable a device, apparatus, or processor to perform the various processing and operations described above. Examples of the carriers include signals, computer-readable media, and the like.

Examples of signals may include electrical, optical, radio, acoustic, or other forms of propagated signals, such as carrier waves, infrared signals, and the like.

The machine-readable medium may be any tangible medium that contains or stores a program for or related to an instruction execution system, apparatus, or device. The machine-readable medium may be a machine-readable signal medium or a machine-readable storage medium. The machine-readable medium may include, but is not limited to, electronic, magnetic, optical, electromagnetic, infrared, or semiconductor systems, apparatuses or devices, or any suitable combination thereof. More detailed examples of machine-readable storage medium include an electrical connection with one or more wires, a portable computer disk, a hard disk, a random access memory (RAM), a read-only memory (ROM), an erasable programmable read-only memory (EPROM or flash memory), an optical storage device, a magnetic storage device, and any suitable combination thereof.

In addition, although the operations are described in a particular order, this should not be understood as requiring such operations to be completed in a particular order shown or in a sequential order, or to perform all of the illustrated operations to obtain an expected result. In some cases, multitasking or parallel processing may be beneficial. Similarly, although the above discussion contains some specific implementation details, this should not be construed as limiting the scope of any invention or claims, but rather as descriptions of specific embodiments that may be directed to a particular invention. Some features described in this specification in the context of separate embodiments may also be integrated and implemented in a single embodiment. Conversely, the various features described in the context of a single embodiment may also be implemented separately in various embodiments or in any suitable sub-combination.

Although the subject matter has been described in language specific to structural features and/or methodological acts, it should be understood that the subject matter defined in the appended claims is not limited to the specific features or acts described above. Rather, the specific features and acts described above are disclosed as example forms of implementing the claims.

## Claims

1. A method of power line communication for internet of things, comprising:
receiving, by a sending device, a first request from a receiving device, wherein the first request requests to perform channel assessment in a first time window in a power line communication periodicity;
sending, by the sending device in response to the first request, a sounding signal required for performing channel assessment to the receiving device;
receiving, by the sending device, a modulation parameter from the receiving device, wherein the modulation parameter is determined by performing channel assessment based on the sounding signal; and
performing, by the sending device, data transmission with the receiving device in the first time window based on the modulation parameter.

2. The method according to claim 1, wherein the receiving a first request comprises:
sending, by the sending device, a first notification of entering a first mode to the receiving device, wherein the sending device and the receiving device in the first mode perform data transmission based on at least one time window in the power line communication periodicity; and
receiving, by the sending device, the first request sent by the receiving device in response to the first notification.

3. The method according to claim 2, wherein the first mode is a rate boost mode RBM.

4. The method according to claim 2, wherein the sending a first notification comprises:
in response to a rate of the data transmission being greater than a predetermined threshold rate, sending, by the sending device, a second request for entering the first mode to a control device; and
in response to receiving, from the control device, a positive response to the second request, sending, by the sending device, the first notification to the receiving device.

5. The method according to claim 2, wherein the sending a first notification comprises:
in response to receiving a first instruction to enter the first mode, sending, by the sending device, a second request for entering the first mode to a control device; and
in response to receiving, from the control device, a positive response to the second request, sending, by the sending device, the first notification to the receiving device.

6. The method according to claim 1, wherein the sending a sounding signal comprises:
sending, by the sending device, a third request for resource allocation of the sounding signal to a control device, wherein the third request comprises information about the first time window;
in response to receiving information about the resource allocation from the control device, sending, by the sending device, a positive response to the first request to the receiving device; and
in response to receiving, from the receiving device, a fourth request for sending the sounding signal, sending, by the sending device, the sounding signal to the receiving device based on the information about the resource allocation.

7. The method according to claim 1, wherein the performing data transmission comprises:
receiving, by the sending device, information about a transmission opportunity from a control device, wherein the transmission opportunity covers the first time window; and
performing, by the sending device, the data transmission with the receiving device at the transmission opportunity by using the modulation parameter.

8. The method according to claim 7, further comprising:
sending, by the sending device, the information about the transmission opportunity to the receiving device.

9. The method according to claim 2, further comprising:
sending, by the sending device, a second notification of exiting the first mode to the receiving device.

10. The method according to claim 9, wherein the sending a second notification comprises:
in response to a rate of the data transmission being less than a predetermined threshold rate, sending, by the sending device, a fifth request for exiting the first mode to a control device; and
in response to receiving, from the control device, a positive response to the fifth request, sending, by the sending device, the second notification to the receiving device.

11. The method according to claim 9, wherein the sending a second notification comprises:
in response to receiving a second instruction for exiting the first mode, sending, by the sending device, a fifth request for exiting the first mode to a control device; and
in response to receiving from the control device, a positive response to the fifth request, sending, by the sending device, the second notification to the receiving device.

12. The method according to claim 10 or 11, further comprising:
in response to receiving, from the control device, a positive response to the fifth request, releasing, by the sending device, the modulation parameter.

13. The method according to claim 4, wherein the sending device is an internet of things subdomain node, the receiving device is an internet of things terminal node, and the control device is a power line communication network primary node.

14. The method according to claim 4, wherein the sending device is an internet of things terminal device, the receiving device is an internet of things subdomain node, and the control device is a power line communication network primary node.

15. A method of power line communication for internet of things, comprising:
sending, by a receiving device, a first request to a sending device, wherein the first request requests to perform channel assessment in a first time window in a power line communication periodicity;
receiving, by the receiving device, a sounding signal that is required for performing channel assessment and that is sent by the sending device in response to the first request;
sending, by the receiving device, a modulation parameter to the sending device, wherein the modulation parameter is determined by performing channel assessment based on the sounding signal; and
performing, by the receiving device, data transmission with the sending device in the first time window based on the modulation parameter.

16. The method according to claim 15, wherein the sending a first request comprises:
receiving, by the receiving device, a first notification of entering a first mode from the sending device, wherein in the first mode, the sending device and the receiving device perform data transmission based on at least one time window in the power line communication periodicity; and
in response to the first notification, sending, by the receiving device, the first request to the sending device.

17. The method according to claim 16, wherein the first mode is a rate boost mode RBM.

18. The method according to claim 15, wherein receiving the sounding signal comprises:
receiving, by the receiving device, a positive response to the first request from the sending device;
in response to the positive response, sending, by the receiving device to the sending device, a fourth request for sending the sounding signal; and
receiving, by the receiving device, the sounding signal sent by the sending device in response to the fourth request.

19. The method according to claim 15, wherein the performing data transmission comprises:
receiving, by the receiving device, information about a transmission opportunity from the sending device, wherein the transmission opportunity covers the first time window; and
performing, by the receiving device, the data transmission based on the transmission opportunity.

20. The method according to claim 15, further comprising:
receiving, by the receiving device, a second notification of exiting the first mode from the sending device; and
in response to the second notification, releasing, by the receiving device, the modulation parameter.

21. The method according to claim 15, wherein the sending device is an internet of things gateway, and the receiving device is an internet of things terminal node.

22. The method according to claim 15, wherein the sending device is an internet of things terminal device, and the receiving device is an internet of things subdomain node.

23. A method of power line communication for internet of things, comprising:
receiving, by a control device from a sending device, a third request for resource allocation of a sounding signal, wherein the third request comprises information about a first time window in a power line communication periodicity, the third request is sent by the sending device in response to a first request from a receiving device, and the first request requests to perform channel assessment in the first time window; and
sending, by the control device, information about the resource allocation to the sending device.

24. The method according to claim 23, wherein before receiving the third request, the method further comprises:
receiving, by the control device, a second request for entering a first mode from the sending device, wherein in the first mode, the sending device and the receiving device perform data transmission based on at least one time window in the power line communication periodicity; and
sending, by the control device, a positive response to the second request to the sending device, so that the sending device sends a first notification of entering the first mode to the receiving device.

25. The method according to claim 24, wherein the first mode is a rate boost mode RBM.

26. The method according to claim 23, further comprising:
sending, by the control device, information about a transmission opportunity to the sending device, wherein the transmission opportunity covers the first time window.

27. The method according to claim 24, further comprising:
receiving, by the control device, a fifth request for exiting the first mode from the sending device; and
sending, by the control device, a positive response to the fifth request to the sending device.

28. The method according to claim 23, wherein the sending device is an internet of things gateway, the receiving device is an internet of things terminal device, and the control device is a power line communication network primary node.

29. The method according to claim 23, wherein the sending device is an internet of things terminal device, the receiving device is an internet of things gateway, and the control device is a power line communication network primary node.

30. A communication apparatus of power line communication for internet of things, comprising:
a processor; and
a power line communication interface coupled to the processor, wherein
the processor is configured to:
receive a first request from a receiving device through the power line communication interface, wherein the first request requests to perform channel assessment in a first time window in a power line communication periodicity;
send, in response to the first request, a sounding signal required for performing channel assessment to the receiving device through the power line communication interface;
receive a modulation parameter from the receiving device through the power line communication interface, wherein the modulation parameter is determined by performing channel assessment based on the sounding signal; and
perform data transmission with the receiving device through the power line communication interface, in the first time window based on the modulation parameter.

31. The communication apparatus according to claim 30, wherein the processor is configured to receive the first request by:
sending a first notification of entering a first mode to the receiving device through the power line communication interface, wherein in the first mode, the communication apparatus and the receiving device perform data transmission based on at least one time window in the power line communication periodicity; and
receiving, through the power line communication interface, the first request sent by the receiving device in response to the first notification.

32. The communication apparatus according to claim 31, wherein the processor is further configured to:
send a second notification of exiting the first mode to the receiving device through the power line communication interface.

33. The communication apparatus according to claim 30, wherein the communication apparatus is an internet of things subdomain node, and the receiving device is an internet of things terminal node.

34. The communication apparatus according to claim 30, wherein the communication apparatus is an internet of things terminal node, and the receiving device is an internet of things subdomain node.

35. A communication apparatus of power line communication for internet of things, comprising:
a processor; and
a power line communication interface coupled to the processor, wherein
the processor is configured to:
send a first request to a sending device through the power line communication interface, wherein the first request requests to perform channel assessment in a first time window in a power line communication periodicity;
receive, through the power line communication interface, a sounding signal that is required for performing channel assessment and that is sent by the sending device in response to the first request;
send a modulation parameter to the sending device through the power line communication interface, wherein the modulation parameter is determined by performing channel assessment based on the sounding signal; and
perform data transmission with the sending device through the power line communication interface in the first time window based on the modulation parameter.

36. The communication apparatus according to claim 35, wherein the processor is configured to send the first request by:
receiving a first notification of entering a first mode from the sending device through the power line communication interface, wherein in the first mode, the sending device and the communication apparatus perform data transmission based on at least one time window in the power line communication periodicity; and
sending the first request to the sending device in response to the first notification through the power line communication interface.

37. The communication apparatus according to claim 36, wherein the processor is further configured to:
receive a second notification of exiting the first mode from the sending device through the power line communication interface; and
release the modulation parameter in response to the second notification.

38. The communication apparatus according to claim 35, wherein the sending device is an internet of things subdomain node, and the communication apparatus is an internet of things terminal node.

39. The communication apparatus according to claim 35, wherein the sending device is an internet of things terminal node, and the communication apparatus is an internet of things subdomain node.

40. A control device of power line communication for internet of things, comprising:
a processor; and
a power line communication interface coupled to the processor, wherein
the processor is configured to:
receive a third request for resource allocation of a sounding signal from a sending device through the power line communication interface, wherein the third request comprises information about a first time window in a power line communication periodicity, the third request is sent by the sending device in response to a first request from a receiving device, and the first request requests to perform channel assessment in the first time window; and
send information about the resource allocation to the sending device through the power line communication interface.

41. The control device according to claim 40, wherein before receiving the third request, the processor is further configured to:
receive a second request for entering a first mode from the sending device through the power line communication interface, wherein in the first mode, the sending device and the receiving device perform data transmission based on at least one time window in the power line communication periodicity; and
send a positive response to the second request to the sending device through the power line communication interface, so that the sending device sends a first notification of entering the first mode to the receiving device.

42. The control device according to claim 41, wherein the processor is further configured to:
receive a fifth request for exiting the first mode from the sending device through the power line communication interface; and
send a positive response to the fifth request to the sending device through the power line communication interface.

43. The control device according to claim 40, wherein the sending device is an internet of things subdomain node, the receiving device is an internet of things terminal node, and the control device is a power line communication network primary node.

44. The control device according to claim 40, wherein the sending device is an internet of things terminal node, the receiving device is an internet of things subdomain node, and the control device is a power line communication network primary node.

45. A power line communication system for internet of things, comprising:
the communication apparatus according to any one of claims 30 to 34;
the communication apparatus according to any one of claims 35 to 39; and
the control device according to any one of claims 40 to 44.

46. A computer-readable storage medium, comprising machine-executable instructions, wherein when the machine-executable instructions are executed by a device, the device is enabled to perform the method according to any one of claims 1 to 29.
